**Europäisches Patentamt**

**European Patent Office**

**Office européen des brevets**

(19)

(11) Numéro de publication: **0 064 014**
**A1**

# (12) DEMANDE DE BREVET EUROPEEN

(21) Numéro de dépôt: **82420050.5**

(22) Date de dépôt: **08.04.82**

(51) Int. Cl.³: **G 03 B 21/64**, G 03 D 15/10

(30) Priorité: **15.04.81 FR 8107736**

(43) Date de publication de la demande: **03.11.82**
**Bulletin 82/44**

(84) Etats contractants désignés: **BE CH DE GB IT LI NL SE**

(71) Demandeur: **Kis France Société Anonyme Société dite:,**
**47 Avenue Marie Reynoard, F-38100 Grenoble (FR)**

(72) Inventeur: **Thebault, Claude, 19, avenue du Vercors,**
**F-38240 Meylan (FR)**

(74) Mandataire: **Laurent, Michel et al, 20 rue Louis Chirpaz**
**Boite Postale 32, F-69130 Lyon-Ecully (FR)**

(54) **Cadre pour diapositive et dispositifs pour la mise en place de film dans ce cadre.**

(57) Cadre (1) pour diapositive monobloc en matière plastique, du type comprenant:

– une ouverture (2) en forme de fenêtre dont la largeur et la longueur:

sur la face avant <u>A</u> sont supérieures à la longueur et à la largeur utiles du film à insérer,

sur la face arrière <u>B</u> sont inférieures à cette longueur et à cette largeur.

– deux rainures horizontales (4) et (5) ménagées dans le plan du film et dans le sens de la longueur de celui-ci, la distance entre le fonds des deux rainures (4) et (5) opposées qui forment butée étant au moins égale à la largeur horstout du film à insérer, caractérisé en ce que les deux petits côtés (15–16) de la face avant <u>A</u> de la fenêtre (2) du cadre (1), sont prolongés par des fentes parallèles (11), (12), (13), (14) ouvertes sur lesdites rainures horizontales (4) et (5) ménagées dans les bords longitudinaux de la fenêtre (2).

L'invention concerne également des dispositifs pour la mise sous cadre des films.

# CADRE POUR DIAPOSITIVE ET DISPOSITIFS POUR LA MISE EN PLACE DE FILM DANS CE CADRE.

L'invention concerne un nouveau type de cadre en matière plastique pour diapositive ; elle se rapporte également à des dispositifs pour la mise en place de film positif dans ce cadre.

Comme on le sait, une "diapositive" est un film positif monté sur un cadre, généralement destinée à être projetée sur un écran. Initialement, ces cadres étaient en carton autocollant qui présentaient l'inconvénient notable de s'abimer, de s'écorner et n'étaient pas réutilisables.

On a également suggéré de réaliser ces cadres en matière plastique. Dans un premier temps, on a proposé de faire appel à deux cadres indépendants clipsables enserrant le film positif. La mise en place du film est alors délicate et le clipsage parfois difficile. Pour assurer une meilleure cohésion des cadres, on peut les coller ou les souder, ce qui malheureusement ne permet pas de les réutiliser.

Plus récemment, on a proposé d'utiliser deux cadres articulés clipsables. Les inconvénients restent sensiblement les mêmes.

Dans le brevet américain 3.069.795, on a décrit un cadre monobloc en matière plastique présentant une ouverture en forme de fenêtre sur les bords de laquelle partent des rainures horizontales situées dans le plan du film pour permettre l'introduction de celui-ci. Dans ce type de cadre :

- la longueur de la fenêtre du côté situé devant le plan du film est supérieure à la longueur du film à insérer,

- tandis que, en revanche, celle du côté situé sur l'arrière du film est inférieure à la longueur de ce film,

- le fonds des rainures forme butée pour le film à introduire, alors que la distance entre les fonds de ces

- 2 -

0064014

rainures opposées est au moins égale à la largeur du film.

La mise en place des films positifs dans ce type de cadre, qui sont d'ailleurs commercialisés avec succès auprès des amateurs, s'effectue à l'aide d'un petit appareil manuel spécialement adapté et de réalisation très simple décrit dans le brevet français n° 75.32 506 publié sous le n° 2 308 124 correspondant au brevet américain 3,996,683. Malheureusement, ce type de cadre et cet appareillage ne permettent pas d'effectuer économiquement la mise en place de plusieurs centaines de diapositives par jour, notamment car ce cadre ne permet pas l'automatisation de ces opérations.

L'invention vise un cadre perfectionné du genre en question qui permette d'automatiser la mise en place des films positifs et qui puisse être économiquement utilisé dans des opérations semi-professionnelles, voire même industrielles.

Ce cadre pour diapositive monobloc en matière plastique, du type présentant :

- une ouverture en forme de fenêtre dont la largeur et la longueur :
  . sur la face avant sont supérieures à la longueur et la largeur utiles du film à insérer ;
  . sur la face arrière sont inférieures à cette longueur et à cette largeur,
- deux rainures horizontales ménagées dans le plan du film et dans le sens de la longueur de celui-ci, la distance entre les fonds des deux rainures opposées, qui forment butée, étant au moins égale à la largeur hors-tout du film se caractérise en ce que les deux petits côtés de la face avant de la fenêtre sont prolongés par des fentes parallèles, ouvertes sur lesdites rainures horizontales, ménagées dans les bords longitudinaux de la fenêtre.

Avantageusement :

- 3 -

0064014

- le cadre est en matière plastique rigide injectée, résistant aux chocs (polystyrène choc ou demi-choc), la couleur de ce cadre pouvant varier selon la nature et la marque du film, ce qui facilitera ainsi les règlages du photographe, lorsque l'on désirera tirer ultérieurement ces films sur papier ;

- les fentes caractéristiques de l'invention sont ménagées sur les petits côtés de la face avant et s'étendent jusqu'à l'extrémité desdites rainures longitudinales, la distance entre le fonds de ces rainures longitudinales étant légèrement supérieure à la largeur effective du film ;

- la largeur de ces fentes parallèles est suffisante pour permettre l'introduction facile du film, sans que l'on ait à exercer des contraintes excessives sur celui-ci ;

- la largeur des fentes parallèles est sensiblement égale :

. à la différence des longueurs entre la fenêtre de la face avant et la fenêtre de la face arrière ;

. et à la différence entre la longueur horstout et la longueur utile du film positif ;

- la face interne de la lèvre supérieure des rainures présente, venus de moulage, des bossages dirigés vers l'intérieur, destinés à maintenir le film en place ;

- les lèvres supérieures des rainures longitudinales sont ajourées pour alléger le cadre et faciliter le démoulage.

La manière dont l'invention peut être réalisée et les avantages qui en découlent ressortiront mieux de l'exemple de réalisation qui suit donné à titre indicatif et non limitatif.

La figure 1 montre un cadre perfectionné conforme à l'invention vu de dessus.

Les figures 2 et 3 représentent un tel cadre respectivement en coupe selon l'axe I-I' et selon l'axe II-II'.

- 4 -

La figure 4 est une vue schématique sommaire d'un film positif à insérer.

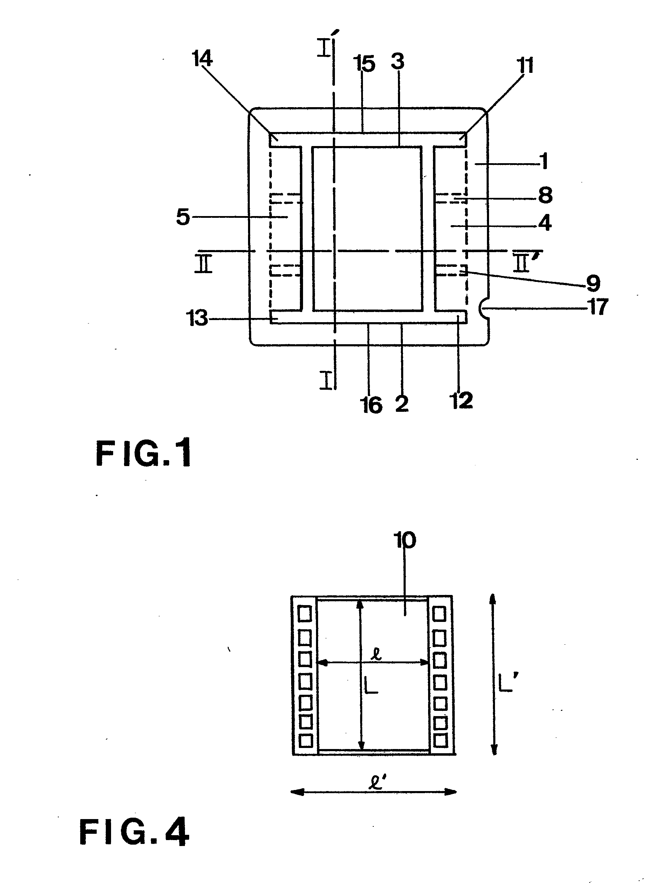

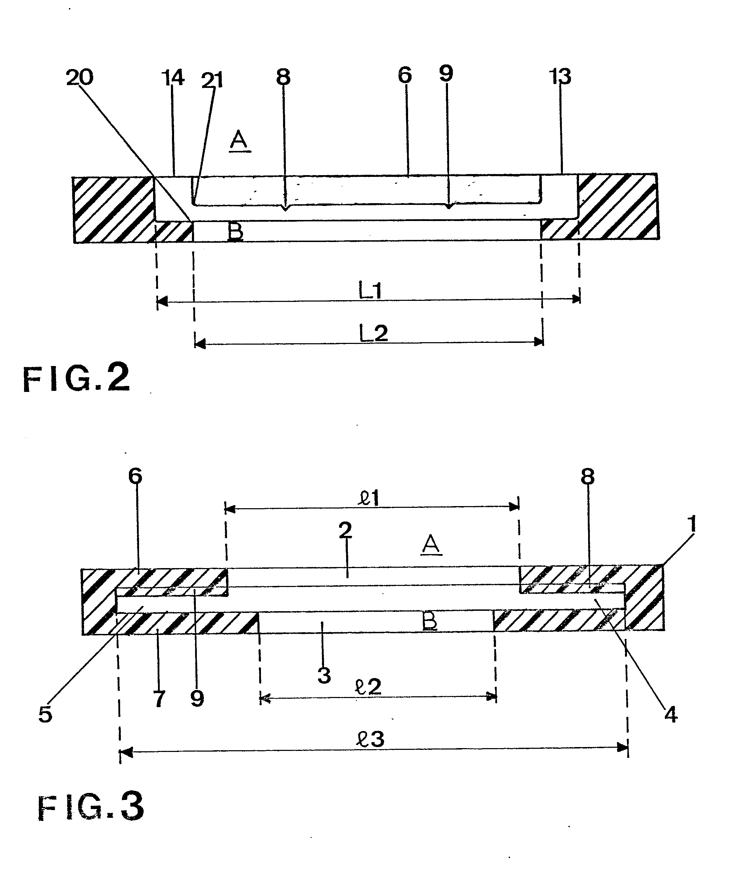

En se référant aux figures 1 à 3, le cadre (1) en polystyrène demi-choc injecté coloré présente :

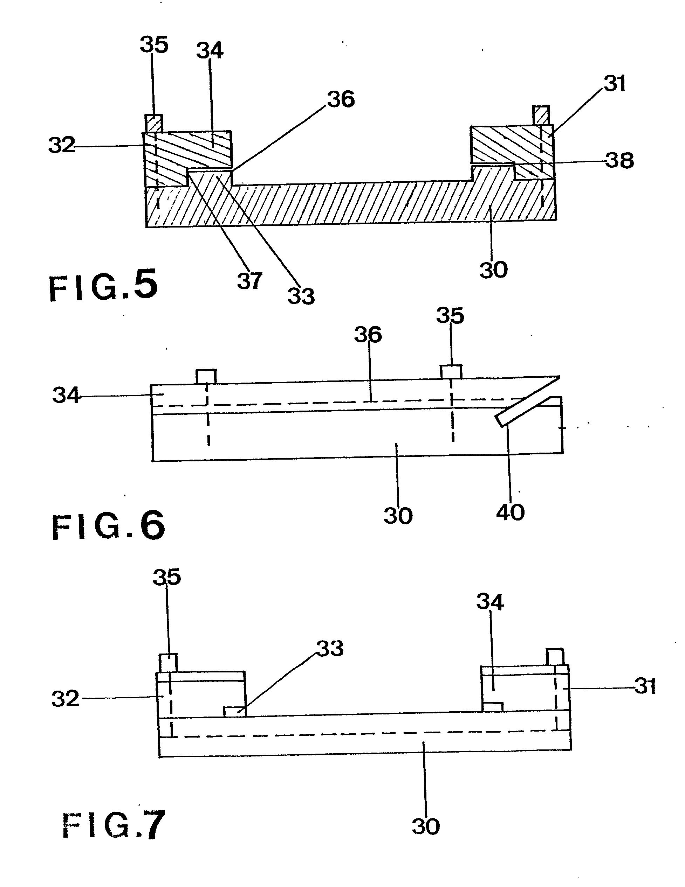

- sur sa face avant $\underline{A}$ une première fenêtre (2) dont la longueur $L_1$ et la largeur $\ell_1$ sont légèrement supérieures à la longueur $\underline{L}$ et à la largeur $\ell$ utiles du film positif (10) à insérer (voir figure 4) ;

- sur sa face arrière $\underline{B}$ une seconde fenêtre (3), dont la longueur $L_2$ et la largeur $\ell_2$ sont inférieures à $\underline{L}$ et $\ell$ ;

- deux rainures horizontales longitudinales opposées (4) et (5), formées chacune de deux lèvres respectivement supérieure (6) et inférieure (7), dont l'écartement $\ell_3$ est au moins égal à la largeur hors-tout $\ell'$ du film positif au jeu près (figure 4); ces rainures (4), (5) sont ménagées dans l'épaisseur du cadre (1);

- la lèvre supérieure (6) de ces rainures (4) et (5) présente, venus de moulage, deux bossages de retenue (8) et (9), destinés à assurer le maintien du film positif (10) ; avantageusement, les parois de ces bossages (8) et (9) sont inclinées à 90° et leur extrémité destinée à venir au contact du film (10) est arrondie ;

- quatre fentes parallèles, respectivement (11), (12), (13), (14), ménagées sur les deux petits côtés (15) et (16) de la face avant $\underline{A}$ de la fenêtre (2), s'étendent jusqu'au fond des rainures (4) et (5) ;

- une encoche de repérage ou de détrompage (17).

Il est indispensable que les bords des fenêtres (2) et (3), des rainures (4) et (5) et du cadre (1) soient arrondis.

Pour un cadre diapositive de 24 ($\underline{\ell}$) x 36 ($\underline{L}$) mm, le cadre (1) a une forme carrée de 50 x 50 mm, dont les côtés se raccordent par des rayons de 1 mm de courbure. La face avant $\underline{A}$ comporte une fenêtre (2) de 25 ($\ell_1$) x 38,5 ($L_1$) mm, alors que la face arrière $\underline{B}$ comporte une

fenêtre (3) de 23 ($\ell_2$) x 35 ($\underline{L}_2$) mm. L'écartement $\ell_3$ entre les deux fonds opposés des rainures (4) et (5) est de 35,5 mm.

Ce cadre (1) a une épaisseur d'environ 2 millimètres et les rayons de courbure des raccords (20) et (21) sont d'environ 0,5 millimètre. L'épaisseur des deux lèvres (6) et (7) est de 0,6 millimètre, et celle des bossages d'environ 0,55 millimètre, de sorte que la hauteur disponible pour le film à insérer est d'environ 0,25 mm.

Les fentes (11), (12), (13), (14) ont une largeur de 1,75 mm et une profondeur de 6,25 mm.

L'invention concerne également un dispositif pour la mise en place des films positifs dans lesdits cadres.

Dans une première version manuelle, adaptée au travail d'amateur, ce dispositif d'un type connu comportant un guide-film formé par deux ensembles de guidage parallèles espacés d'une distance au moins égale à la largeur hors-tout $\ell'$ du film positif, chaque ensemble étant formé d'un rail supérieur et d'un rail inférieur écarté d'une distance au moins égale à l'épaisseur dudit film, se caractérise :

- en ce que l'extrémité de ce guide présente une fente transversale, perpendiculaire par rapport à l'axe longitudinal du film, inclinée par rapport à l'horizontal, destinée à recevoir le cadre caractéristique de l'invention ;

- en ce que le plan supérieur du rail de guidage inférieur débouchant dans la fente transversale coïncide avec le bord d'un des petits côtés du cadre qui présente les fentes ouvertes sur les rainures ;

- et en ce que l'angle d'inclinaison du cadre par rapport au plan d'avancement du film dans le guide est suffisant pour permettre à ce film d'avancer dans les rainures longitudinales du cadre sous le simple effet de la poussée exercée par le film suivant.

Les figures 5, 6 et 7 montrent schématiquement un tel dispositif manuel vu respectivement en coupe transversale, en vue de côté, en vue de face côté fente.

Ce dispositif manuel se compose d'une embase (30) sur laquelle se déroule le film positif présentant de chaque côté deux ensembles (31) et (32) de guidage de film et dans laquelle est ménagé un rail inférieur (33).

Un rail supérieur (34) maintenu par des vis (35) est écarté du plan supérieur (36) du rail (33) d'une distance au moins égale à l'épaisseur du film positif, par exemple de 0,25 millimètre. Chaque ensemble (31) et (32) comporte un rail (34) et la distance entre les fonds (37-38) du chemin formé par ces rails (33-34) est légèrement plus grande que la largeur hors-tout $\ell'$ du film à insérer.

Une extrémité de ce dispositif manuel comporte une fente (40) inclinée à 30° dans laquelle viendra se loger le cadre (1). Une fois le cadre (1) en place dans cette fente inclinée (40), les bordures (15) ou (16) des deux petits côtés de la fenêtre (2) de la face avant A du cadre sur laquelle sont ménagées les fentes parallèles (11), (12), (13), (14) coïncident avec le plan horizontal supérieur (36) du rail inférieur (33). De la sorte, lorsque l'on exerce une poussée sur le film découpé (10) à insérer, soit à l'aide du film qui le suit, soit sur le film lui-même, ce film positif glisse sur ce plan horizontal (36), arrive au voisinage de la fente (40), pénètre alors dans les fentes correspondantes du cadre (1), par exemple (11), (14) du petit côté (15) de la face avant A, vient ensuite buter contre les bordures de la fenêtre arrière (3) et enfin pénètre dans les rainures (4) et (5), jusqu'à venir se loger parfaitement dans celles-ci.

Si l'angle d'inclinaison de la fente inclinée (40) était trop important, les efforts de poussée à fournir seraient trop importants, ce qui pourrait même entraîner une détérioration de l'état de surface du film à insérer.

Ainsi, dans le cadre monobloc perfectionné selon l'invention, l'introduction du film s'effectue dans le sens de la longueur de celui-ci, alors que dans le cadre décrit dans le brevet américain n° 3 069 795 ou dans le brevet français n° 75/32 506, publié sous le n° 2 308 124, cités dans le préambule, cette introduction s'effectue dans le sens de la largeur, ce qui est souvent préjudiciable pour l'état de surface.

Lorsque l'on désire retirer le film positif inséré dans le cadre caractéristique de l'invention, il suffit de former sur le film un pli dans le sens de sa largeur pour dégager alors un des côtés, et ensuite retirer aisément ce film.

L'invention concerne également un second type de dispositif pour la mise sous cadre automatique de diapositive à partir des cadres perfectionnés décrits ci-dessus.

Des dispositifs automatiques pour la mise sous cadre de diapositives sont connus. En règle générale, ces dispositifs sont complexes, coûteux, encombrants et ne permettent pas de travailler économiquement, même sur des petites séries ou a fortiori au coup par coup.

En revanche, le dispositif automatique conforme à l'invention pallie ces inconvénients.

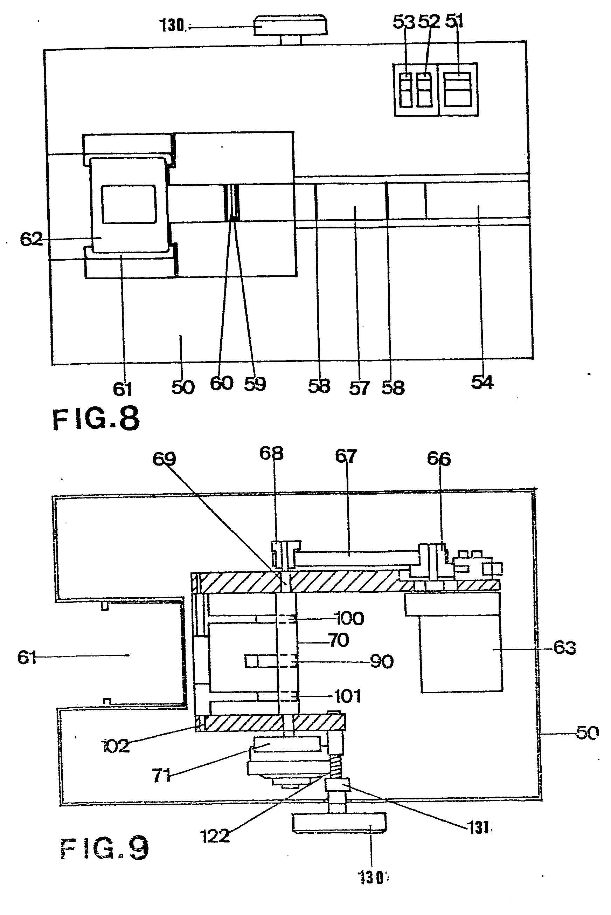

Les figures 8 à 14 représentent un tel dispositif automatique vu respectivement :

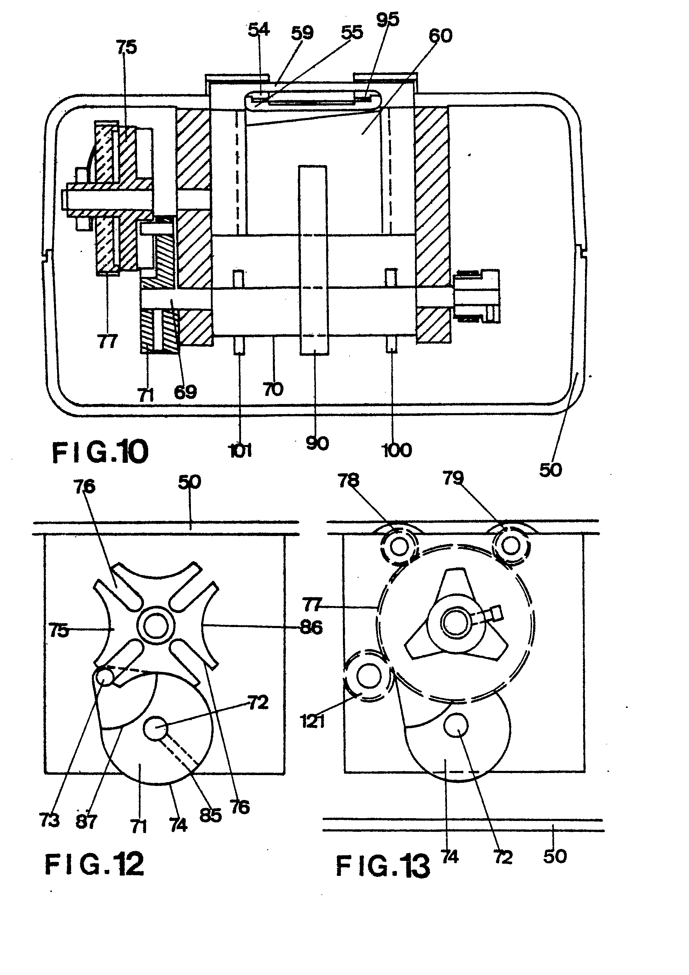

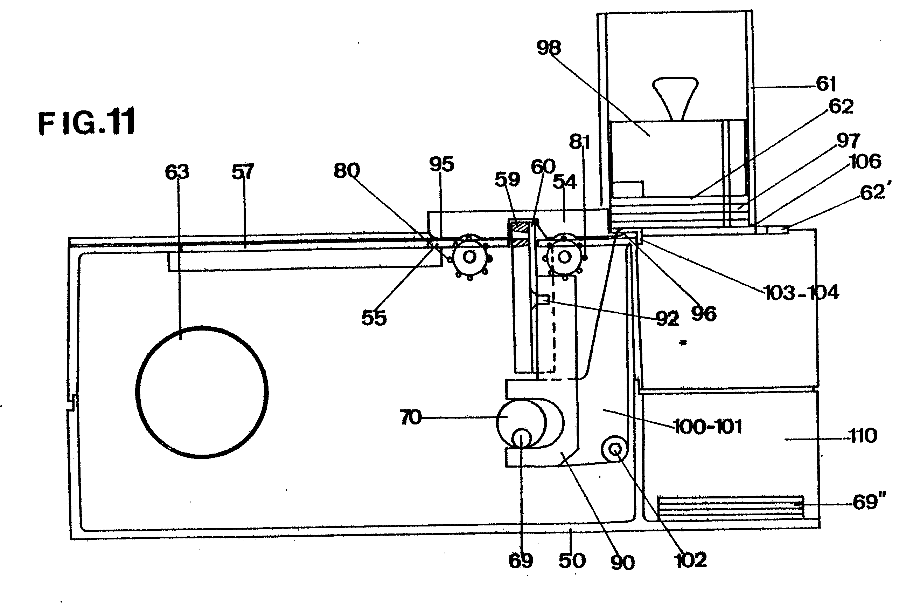

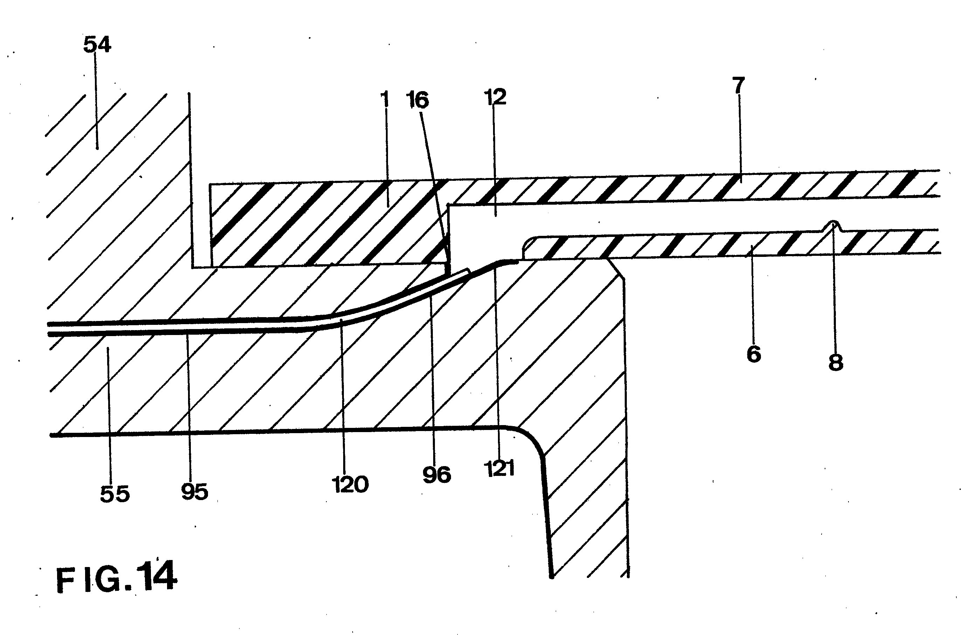

- de dessus (figure 8),
- en coupe horizontale (figure 9),
- en coupe verticale (figure 10),
- en coupe longitudinale (figure 11),
- deux vues de détail (figures 12 et 13),
- un détail grossi de la sortie (figure 14).

En se référant à ces figures 8 à 14, le dispositif automatique pour la mise sous cadre de diapositive conforme à l'invention se compose d'un carter (50), par exemple en zamac ou en matière plastique moulée, sur la face supérieure duquel (figure 8) se trouve :

- un interrupteur général (51) et deux interrupteurs respectivement pour la commande au coup par coup (52) ou en commande répétitive (53) ;

- un guide-film formé d'un rail inférieur (55) et d'un rail supérieur (54) entre lesquels se déplace le film à insérer ;

- une visionneuse (57) avec ses deux traits de positionnement (58) pour le film ;

- un ciseau à guillotine constitué par une partie fixe (59) et une poulie mobile (60) ;

- un magasin (61) dans lequel viendra s'empiler les cadres caractéristiques de l'invention (62-1).

L'intérieur de ce carter (voir figure 9) comporte un moteur motoréducteur (63), dont le pignon de sortie (66) entraîne une courroie crantée (67) qui à son tour entraîne un pignon (68) solidaire d'un arbre (69) à came (70). Cet arbre horizontal (69) porte à son autre extrémité une pièce verticale (71) rotative autour d'un axe (72) qui coïncide avec (69).

Cette pièce verticale rotative (71) présente à une extrémité un manetton (73) et à son autre extrémité une lunule (74) dont l'axe coïncide avec (72), donc (69). Ce manetton (73) coopère avec une croix de Malte (75) à quatre branches dans laquelle sont ménagées des rainures de guidage (76). Cette croix de Malte (75) est solidaire d'un pignon denté (77) sur lequel engrènent deux petits pignons dentés (78) et (79), solidaires à leur tour des débiteurs de film (80-81).

Lorsque l'arbre (69) fait un tour, la pièce (71) fait un tour, la croix de Malte (75) se déplace donc seulement de un quart de tour et comme le rapport entre les diamètres des engrenages (77) et (78-79) est seulement de un quart, les pignons (78-79), et par voie de conséquence les débiteurs (80-81), font donc un tour. La circonférence de ces débiteurs (80-81) est égale à la longueur du film à insérer et l'écartement entre ces deux débiteurs (80-81) est fonction des perforations longitudinales et latérales du film. En outre, cet écartement doit être inférieur à la longueur du film, afin qu'à tout moment celui-ci soit toujours maintenu par au moins l'un des deux débiteurs (80-81), ce qui assure également l'avance du film sous la poussée du film suivant.

La courbure extérieure (85) de la lunule (74) correspond à la courbure (86) située à l'extrémité des branches de la croix de Malte (75), alors que la courbure interne (87) a pour fonction de faciliter seulement le dégagement des extrémités des rainures (76) de la croix de Malte (75).

L'arbre horizontal (69) à câme (70) est entouré en son centre par une fourchette verticale (90) solidaire du couteau mobile (60), grâce à des vis (92). Cette fourchette (90) repose sur la câme (70). Lorsque cette câme (70) est en bas, la fourchette (90) est en bas, donc le couteau mobile (60) est en bas. A ce moment, on est au milieu de la phase d'avance du film.

Plus exactement, la phase d'avance du film débute lorsque le manetton (73) rentre dans la rainure (76) de la croix de Malte (75). A ce moment, la câme (70) est près du point mort bas, donc le couteau mobile (60) est presque en bas. Les débiteurs (80-81) sont entraînés et tirent donc le film positif découpé vers la droite pour l'insérer dans le cadre de la manière qui sera détaillée ci-après. En remontant, cette câme (70) entraîne la fourchette (90), donc le couteau (60) vers le haut.

Le chemin (95) formé entre les rails (54) et (55) sur lequel glisse le film (120) se termine par une portion relevée inclinée (96) représentée en grossissement à la figure 14. Le débouché (121) de cette portion (96) coïncide avec les fentes (12-13) ménagées dans le petit côté (16) de la fenêtre avant (2) du cadre caractéristique de l'invention. De la sorte, le film positif (120) qui arrive sur cette rampe (96) poussé par le film suivant, préalablement découpé par la guillotine (59-60), entraîné par les débiteurs (80-81), glisse sur cette rampe (96) et en glissant sur (121) pénètre donc automatiquement dans ces fentes (12, 13) du cadre horizontal (62-1). Dans le magasin (61), se trouve un empilement (97) de cadres élémentaires (62), maintenus en position horizontale grâce à un poids presseur (98).

Le film positif étant maintenant parfaitement en place dans le cadre (62), il faut éjecter ce cadre de diapositive, afin que le film suivant puisse être à son tour automatiquement inséré dans un autre cadre.

Pour ce faire, l'arbre (69) à câme (70) présente également à ses deux extrémités deux fourchettes verticales (100) et (101) articulées toutes deux autour d'un axe horizontal fixe (102). Ces fourchettes présentent à leurs extémités des becs éjecteurs (103-104) qui viennent juste prendre appui sur la face latérale inférieure du cadre (62) en travail.

Lorsque la câme (70) est en bas, les éjecteurs (103-104) sont rentrés, c'est-à-dire ne s'appuient pas sur le cadre (62). En revanche, lorsque la câme (70) est en haut, par effet de levier, ces éjecteurs (103-104) sortent comme représenté à la figure 11, et poussent donc le cadre rempli (62') vers l'extérieur. Pour ce faire, le fond (106) de la face avant du magasin (61) est surélevée par rapport au plan du rail inférieur (55) au niveau du débouché (96) d'une hauteur au moins égale à l'épaisseur du cadre (62). Ainsi, le cadre rempli 62' peut se mouvoir librement dans un plan horizontal simplement sous l'effet de la poussée des éjecteurs (103-104).

Dans une variante, ces éjecteurs (103-104) peuvent également être escamotables pour faciliter la mise en position du cadre (62) suivant.

Comme déjà dit, le poids (98) exerce une pression constante sur l'empilement (97) et évite ainsi le basculement de cet empilement, notammment en fin de course.

Les cadres remplis (69") sont récupérés à la main

0064014

- 11 -

dans une boite (110).

Pour la première vue ou en cours de fonctionnement, si l'on désire corriger le cadrage des films, on opère manuellement par le volant (130) qui porte un pignon (131) et un ressort de compression (122). Ce pignon (131) engrène dans (77). Un débrayage classique à friction, non représenté en détail permet de débrayer la croix de Malte (75) du pignon (77) et ainsi de faire tourner seulement les débiteurs (80-81).

Pour la commande au coup par coup, ou pour la mise en place du dernier film en commande répétitive, le pignon (66) du moteur (63) présente un repère, par exemple une encoche, dans laquelle viendra se placer le galet d'un microrupteur qui coupera alors l'alimentation électrique.

Le cadre monobloc pour diapositive conforme à l'invention et les dispositifs pour sa mise en oeuvre, présente de nombreux avantages par rapport aux solutions commercialisées à ce jour. On peut citer :

- pour le cadre lui-même :
    . sa constitution monobloc,
    . sa facilité de fabrication,
    . la possibilité de le réutiliser,
    . la possibilité de l'utiliser dans un processus automatique de mise en place ;
- pour le dispositif manuel de mise sous cadre :
    . sa simplicité de construction,
    . son coût très réduit,
    . sa mise en oeuvre très commode ;
- pour le dispositif automatique de mise sous cadre:
    . sa simplicité, son coût réduit, sa fiabilité,
    . sa compacité et son faible encombrement,
    . la possibilité de travailler indifféremment au coup par coup ou en commande répétitive,
    . la facilité de mise en oeuvre, même par des non-professionnels.

0064014

REVENDICATIONS

1/ Cadre (1) pour diapositive monobloc en matière plastique, du type présentant :

- une ouverture (2) en forme de fenêtre dont la largeur et la longueur :

    . sur la face avant $\underline{A}$ sont supérieures à la longueur et à la largeur utiles du film à insérer,

    . sur la face arrière $\underline{B}$ sont inférieures à cette longueur et à cette largeur.

- deux rainures horizontales (4) et (5) ménagées dans le plan du film et dans le sens de la longueur de celui-ci, la distance entre les fonds des deux rainures (4) et (5) opposées qui forment butée étant au moins égale à la largeur hors-tout du film à insérer, caractérisé en ce que les deux petits côtés (15-16) de la face avant $\underline{A}$ de la fenêtre (2) du cadre (1), sont prolongés par des fentes parallèles (11), (12), (13), (14) ouvertes sur lesdites rainures horizontales (4), (5) ménagées dans les bords longitudinaux de la fenêtre (2).

2/ Cadre selon revendication 1, caractérisé en ce qu'il est en matière plastique rigide injectée.

3/ Cadre selon l'une des revendications 1 et 2, caractérisé en ce que les fentes (11), (12), (13), (14) ménagées sur les petits côtés (15), (16) de la face avant $\underline{A}$ de la fenêtre (2) s'étendent jusqu'à l'extrémité des rainures longitudinales (4), (5), la distance entre le fond de ces rainures longitudinales (4), (5) étant légèrement supérieure à la largeur hors-tout $\ell'$ du film à insérer.

4/ Cadre selon l'une des revendications 1 à 3, caractérisé en ce que la largeur des fentes parallèles (11), (12), (13), (14) est sensiblement égale à la différence de longueur des fenêtres (2) et (3) de la face avant $\underline{A}$ et de la face arrière $\underline{B}$ du cadre (1) et à la différence entre la longueur hors-tout $\underline{L'}$ et la longueur utile $\underline{L}$ du film à insérer.

0064014

5/ Cadre selon l'une des revendications 1 à 4, caractérisé en ce que la face interne de la lèvre supérieure (6) des rainures (4) et (5) présente, venus de moulage, des bossages (8-9) dirigés vers l'intérieur, destinés à maintenir le film en place.

6/ Dispositif pour la mise en place de film positif dans un cadre selon l'une des revendications 1 à 5, du type comportant un guide-film formé par deux ensembles de guidage parallèles (31-32) espacés d'une distance égale à la largeur hors-tout $l'$ du film positif à insérer, chaque ensemble étant formé d'un rail supérieur (34) et d'un rail inférieur (33) écartés d'une distance au moins égale à l'épaisseur dudit film, caractérisé :

- en ce que l'extrémité de ce guide présente une fente transversale (40) perpendiculaire à l'axe longitudinal du film, inclinée par rapport à l'horizontal, destinée à recevoir le cadre selon l'une des revendications 1 à 5 ;

- en ce que le plan supérieur (36) du rail de guidage inférieur (33) débouchant dans la fente transversale (40) coïncide avec le bord extérieur des petits côtés (15-16) du cadre (1) qui présentent les fentes ouvertes (11), (12), (13), (14) sur les rainures (4), (5) ;

- et en ce que l'angle d'inclinaison du cadre (1) par rapport au plan d'avancement du film dans le guide est suffisant pour permettre à ce film d'avancer dans les rainures longitudinales (4), (5) du cadre (1) sous le simple effet de la poussée exercée par le film suivant.

7/ Dispositif selon la revendication 6, caractérisé en ce que la fente transversale (40) destinée à recevoir le cadre (1) est inclinée à environ 30° par rapport à l'horizontal.

8/ Dispositif automatique pour la mise sous cadre de diapositive à partir de cadre selon l'une des revendications 1 à 5, du type comportant un carter (50)

0064014

présentant sur sa face supérieure :

    . un guide-film (94-54-55) sur lequel se déplace le film (120) à insérer,

    . un ciseau (59-60),

    . un magasin (61) destiné à recevoir un empilement de cadres (1) selon l'une des revendications précédentes, caractérisé en ce qu'il comporte un moteur motoréducteur (63) qui entraîne un arbre (69) à came (70) horizontal,

    - ledit arbre (69) présentant à son extrémité opposée à celle du moteur (63) une pièce verticale rotative (71) comportant un manetton (73) qui coopère avec une croix de Malte (75) solidaire de deux débiteurs de film (80-81) placé à l'extrémité du guide-film (54-55) ;

    - la came (70) étant entourée :

        . en son centre par une fourchette verticale (90) solidaire du couteau mobile (60) du ciseau (59-60),

        . au voisinage de ses deux extrémités horizontales par deux fourchettes verticales (100) et (101) articulées sur un axe horizontal (102), lesdites fourchettes (100-101) présentant à leur extrémité des éjecteurs (103-104) qui prennent appui sur la face du cadre (62) en travail ;

    - le chemin (95) sur lequel glisse le film (120) se termine par une portion relevée inclinée (96) dont le débouché (121) coïncide avec les fentes parallèles (12-13) du cadre (1).

    9/ Dispositif automatique selon revendication 8, du type dans lequel le carter (50) présente sur sa face supérieure une visionneuse (57), avec deux traits de positionnement (58) pour le film, caractérisé en ce qu'il comporte un volant manuel (120) destiné à agir sur les débiteurs (80-81), ledit volant (120) étant associé à un organe de débrayage de la croix de Malte (75).

    10/ Dispositif automatique selon l'une des

- 15 -

revendications 8 et 9, caractérisé en ce que la croix de Malte (75) a quatre branches et est solidaire d'un pignon denté (77) sur lequel engrènent deux autres pignons dentés (78-79) solidaires des débiteurs (80-81), le rapport entre les diamètres des engrenages (77) et (78-79) étant de un quart.

**FIG.1**

**FIG.4**

FIG.2

FIG.3

FIG.5

FIG.6

FIG.7

**FIG.8**

**FIG.9**

FIG.10

FIG.12

FIG.13

FIG.11

FIG. 14

# 0064014

Office européen
des brevets

**RAPPORT DE RECHERCHE EUROPEENNE**

Numéro de la demande

EP  82 42 0050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | US-A-3 996 683 (R. HANKE) <br> * colonnes 2,3; figures 1-8 * & <br> FR - A - 2 308 124 | 1 | G 03 B  21/64 <br> G 03 D  15/10 |
| D,A | US-A-3 069 795 (A.L. LIEBERMAN) <br> * colonne 2; figures 1-7 * | 1 | |
| A | FR-A-1 102 106 (J. LENGLET) <br> * page 1, figures 1-4 * | 1 | |
| A | US-A-3 524 299 (P. MUNDT et al.) <br> * colonne 3; figures 1,2 * | 6 | |
| A | US-A-4 237 678 (E.R. THOMPSON) <br> * colonnes 5-12; figures 1-17 * | 8,9 | |

| | | | DOMAINES TECHNIQUES RECHERCHES (Int. Cl. ³) |
|---|---|---|---|
| | | | G 03 B  21/64 <br> G 03 D  15/10 |

Le présent rapport de recherche a été établi pour toutes les revendications

| Lieu de la recherche | Date d'achèvement de la recherche | Examinateur |
|---|---|---|
| LA HAYE | 27-07-1982 | BOEYKENS J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82